# EUROPÄISCHE PATENTANMELDUNG

(11) **EP 1 671 694 A2**
(43) Veröffentlichungstag der Anmeldung: **21.06.2006**
(21) Anmeldenummer: 05024764.2
(22) Anmeldetag: 12.11.2005
(51) Int. Cl.: B01D 29/09, B01D 29/94

(54) **Filtervorrichtung**

(30) Priorität: 20.12.2004 DE 102004062415
(71) Anmelder: KNOLL MASCHINENBAU GMBH, 88348 Bad Saulgau (DE)
(72) Erfinder: Vogel, Karl-Rudolf, 88427 Bad Schussenried (DE)
(74) Vertreter: Roth, Klaus

(57) **Zusammenfassung**

Es wird eine Filtervorrichtung mit einer drehbaren Auflage (7) für ein durchlaufendes Filtervlies (8), das in einer Aufwärtsbewegung aus einer zu filternden Flüssigkeit und von der drehbaren Auflage (7) weggeführt ist, vorgeschlagen, bei der eine zuverlässige Mitnahme der ausgefilterten Partikel bzw. eines Filterkuchens beim Entfernen des Filtervlieses (8) in der Aufwärtsbewegung zu erzielen ist. Dies wird erfindungsgemäß dadurch erreicht, dass ein Mitnehmer (14) an einer bezogen auf die drehbare Auflage (7) stationären Halterung (12) befestigt ist.

## Beschreibung

Filtervorrichtungen zur Aufbereitung von Flüssigkeiten wie beispielsweise Kühlschmiermittel von Werkzeugmaschinen sind schon in unterschiedlichsten Ausführungen bekannt geworden.

Bei einer handelsüblichen Ausführungsform ist eine drehbare Auflage für ein durchlaufendes Filtervlies innerhalb einer Flüssigkeitswanne angeordnet. Die zu filternde Flüssigkeit wird ins Innere der drehbaren Filterauflage eingeleitet, beispielsweise durch einen axialen Zufluss im Bereich der Drehachse. Die durch das Filtervlies fließende gefilterte Flüssigkeit sammelt sich sodann unterhalb bzw. seitlich außerhalb des Filtervlieses in der Flüssigkeitswanne, während sich die abgefilterten Partikel auf dem Filtervlies als Filterkuchen absetzen.

Das Filtervlies wird hierbei in einem Einlaufbereich der drehbaren Auflage zugeführt und auf diese aufgelegt. Das frische Filtervlies wird sodann mit der drehbaren Auflage durch die Flüssigkeitswanne hindurch und anschließend durch die Drehung in einer Aufwärtsbewegung aus dieser herausgeführt. Das Filtervlies wird in dieser Aufwärtsbewegung zusammen mit einem etwaigen Filterkuchen von der drehbaren Auflage abgenommen und entsorgt, bzw. wieder aufbereitet.

Bei der Entnahme des Filtervlieses in der Aufwärtsbewegung stellt sich hierbei das Problem, den Filterkuchen in der Aufwärtsbewegung mitzuführen, ohne dass dieser nach unten auf das nachfolgende Vlies bzw. in die zu filternde Flüssigkeit zurückfällt.

Zu diesem Zweck sind bei den Filtervorrichtungen z.B. gemäß DE 37 40 992 Al oder DE 90 17 590 U1 Mitnehmer an der drehbaren Auflage vorgesehen worden, um den Filterkuchen beim Lösen des Filtervlieses von der Auflage mitzunehmen. Derartige Mitnehmer sind bei der beschriebenen handelsüblichen Ausführungsform drehbar an der drehbaren Auflage befestigt, so dass sie in der Lage sind, bei zunehmender Beabstandung des Filtervlieses von der Auflage diesen Abstand durch eine Drehbewegung zu überbrücken.

Nachteilig bei dieser Ausführung ist der Umstand, dass diese drehbaren Mitnehmer unmittelbar an der seinerseits drehbaren Auflage befestigt sind und somit stets durch die zu filternde verunreinigte Flüssigkeit geführt werden. Durch Verunreinigungen ist dabei eine Beeinträchtigung der Beweglichkeit der Mitnehmer möglich, was zu einer Beeinträchtigung der Mitnehmerfunktion führen kann.

Aufgabe der Erfindung ist es daher, eine Filtervorrichtung der einleitend genannten Art vorzuschlagen, bei der eine zuverlässige Mitnahme der ausgefilterten Partikel bzw. eines Filterkuchens beim Entfernen des Filtervlieses in der Aufwärtsbewegung zu erzielen ist.

Diese Aufgabe wird, ausgehend von einer Filtervorrichtung der einleitend genannten Art, durch den kennzeichnenden Teil des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Filtervorrichtung dadurch aus, dass der Mitnehmer an einer bezüglich der drehbaren Auflage stationären Halterung befestigt ist.

Durch diese stationäre Befestigung wird der Mitnehmer nicht ständig durch die verunreinigte zu filternde Flüssigkeit geführt, so dass Funktionsbeeinträchtigungen durch Verschmutzung oder dergleichen ausgeschlossen sind.

In einer vorteilhaften Ausführungsform der Erfindung wird zusätzlich ein fest mit der Auflage verbundener und damit mit dieser rotierender Mitnehmer vorgesehen. Ein solcher Mitnehmer sorgt für eine zuverlässige Mitnahme des gefilterten Filterkuchens auf dem Vlies während der Drehbewegung der Auflage durch die zu filternde Flüssigkeit und unterstützt die Mitnahme des Filterkuchens auch bei der Beabstandung des Filtervlieses von der drehenden Auflage in der Aufwärtsbewegung.

In einer bevorzugten Ausführungsform der Erfindung wird der stationäre Mitnehmer beweglich in seiner Halterung gelagert. Auf diese Weise ist der an der stationären Halterung befestigte Mitnehmer in der Lage, der Bewegung des Filtervlieses von der Auflage weg zu folgen und dabei seine Mitnahmefunktion über eine gewisse Distanz auszuüben.

Vorteilhafterweise wird der an der stationären Halterung gelagerte Mitnehmer hierzu drehbar gelagert. Hierdurch kann der stationäre Mitnehmer eine Drehbewegung um seine Drehachse ausführen, so dass seine vordere auf einem rotierenden Mitnehmer oder auf dem Filtervlies aufliegende Abstreifkante eine Kreisbewegung mit einem gewissen Radius durchführt, während diese Abstreifkante als funktionsgemäßer Mitnehmer oder Abstreifer arbeitet.

Vorteilhafterweise wird weiterhin ein Steuerelement zur Steuerung der Bewegung des stationären Mitnehmers vorgesehen. Durch ein solches Steuerelement ist es möglich, die Bewegung und dabei insbesondere die Geschwindigkeit des an der stationären Halterung gelagerten Mitnehmers so zu steuern, dass eine gute Mitnahme bzw. ein guter Abstreifeffekt während des Vorschubs des Vlieses bewirkt wird.

Die Steuerung des stationären Mitnehmers wird vorzugsweise als Kurvensteuerung ausgelegt. Dies ermöglicht eine gesteuerte Bewegung des an der stationären Halterung gelagerten Mitnehmers, die mit wenig Aufwand realisierbar ist und insbesondere keinen separaten Antrieb benötigt. Der Antrieb kann durch den Antrieb der drehbaren Auflage übernommen werden.

In einer Weiterbildung der Erfindung wird der rotierende Mitnehmer mit einer elastischen Lippe versehen. Eine solche elastische Lippe bietet den Vorteil, dass sie beim Aufdrücken auf das Filtervlies oder beim Anschlag auf entsprechende Führungselemente für das Vlies nachgeben kann und bei der Beabstandung des Vlieses mit Filterkuchen von der rotierenden Auflage über einen gewissen Abstand über den Umfang des drehbaren Aufnahmeelementes abstehen kann. Somit kann diese elastische Lippe in der Aufwärtsbewegung auch noch bei einem entsprechenden Abstand des Vlieses von der drehbaren Auflage auf dem Vlies aufliegen und dadurch die entsprechende Mitnahmefunktion ausüben.

Der stationär gelagerte Mitnehmer kann insbesondere in Verbindung mit einer gesteuerten Bewegung dabei so mit dem rotierenden Mitnehmer wechselwirken, dass er während der Aufwärtsbewegung des Vlieses bzw. der Drehbewegung des drehenden Mitnehmers an dem drehenden Mitnehmer und/oder an den fortlaufenden Vlies eine abstreifende Bewegung ausübt. Somit wird zum einen gewährleistet, dass keine Verunreinigungen an dem drehenden Mitnehmer haften bleiben. Zum anderen wird eine Ausführung möglich, bei der mit zunehmendem Abstand des drehenden Mitnehmers von dem auszutragenden Vlies der stationäre Mitnehmer die Mitnahmefunktion für den Filterkuchen bzw. die auf dem auszutragenden Vlies haftenden Verunreinigungen übernimmt.

In einer besonderen Weiterbildung der Erfindung wird der rotierende Mitnehmer stirnseitig an der drehbaren Auflage befestigt. Es ist jedoch ohne weiteres denkbar, den rotierenden Mitnehmer als längs über die Mantelfläche der rotierenden Auflage sich erstreckendes leistenförmiges Element auszubilden, an dem eine durchgehende elastische Mitnehmerlippe befestigbar ist. Diese Mitnehmerlippe kann beispielsweise verklemmt, verschraubt oder auf ähnliche Weise befestigt werden.

Darüber hinaus ist es in einer vorteilhaften Ausführungsform der Erfindung vorgesehen, an dem rotierenden Mitnehmer einen Anschlag für den stationär gelagerten Mitnehmer anzubringen. Sobald der stationär gelagerte Mitnehmer mit dem rotierenden Mitnehmer in Anschlag kommt, kann anschließend die entsprechende Kurvensteuerung und somit auch die gesteuerte Bewegung des stationär gelagerten Mitnehmers erzielt werden.

Das die Steuerkurve aufweisende Kurvenelement wird hierzu vorzugsweise am stationär gelagerten Mitnehmer angebracht, wobei wenigstens eine solche Steuerkurve vorgesehen ist. Diese Steuerkurve wird vorteilhafterweise im Bereich der Stirnseite der drehenden Auflage bzw. des daran befestigten drehenden Mitnehmers angebracht. Grundsätzlich ist jedoch die Anordnung von einem oder mehreren Kurvenelementen und Gegenanschlägen an einer oder mehreren beliebigen Stellen in Längsrichtung der Vorrichtung möglich.

Weiterhin wird vorzugsweise ein Rückstellelement, z.B. in Form eine Rückstellfeder für den stationär gelagerten Mitnehmer vorgesehen. Dieses Rückstellelement sorgt zum einen dafür, dass der stationär gelagerte Mitnehmer mit seiner Steuerkurve bzw. mit seinem die Steuerkurve aufweisenden Kurvenelement stets während seiner Bewegung im Anschlag mit dem Anschlag des drehenden Mitnehmers bleibt und somit eine präzise Bewegung ausführt. Darüber hinaus dient das Rückstellelement dazu, nach Abschluss der gewünschten Bewegung des stationär gelagerten Mitnehmers diesen in seine Ausgangsposition zurückzubringen, so dass er beim erneuten Anschlag des gleichen oder im Falle mehrerer drehender Mitnehmer des nächsten Mitnehmers wieder erfindungsgemäß zur Verfügung steht.

Ein Ausführungsbeispiel der Erfindung ist in der Zeichnung dargestellt und wird anhand der Figuren nachfolgend näher erläutert.

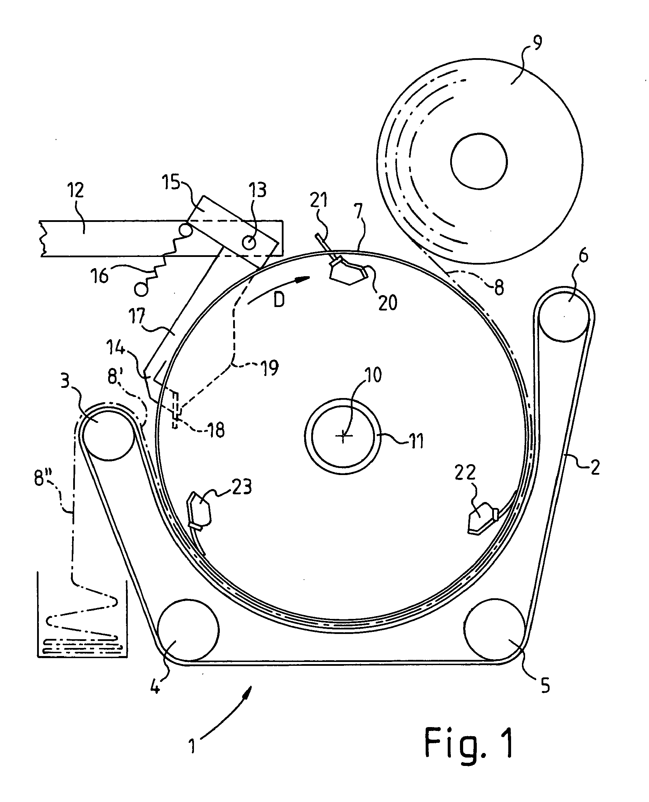

Im Einzelnen zeigen die Figuren 1 bis 4 einen schematischen Querschnitt durch eine erfindungsgemäße Filtervorrichtung in verschiedenen Zeitpunkten während des Bewegungsablaufs.

Fig. 1 zeigt eine erfindungsgemäße Vorrichtung 1.

Die Filtervorrichtung 1 umfasst einen umlaufenden sogenannten Tragbandgurt 2, der über Umlenkrollen 3, 4, 5, 6 umläuft.

Der Tragbandgurt 2 befindet sich in einer nicht dargestellten Flüssigkeitswanne, die jedoch nur der Aufnahme der gereinigten Flüssigkeiten dient und daher in der Darstellung nicht eingezeichnet ist.

Eine trommelförmige drehbare Auflage 7 für ein Filtervlies 8, das von einer Vorratsrolle 9 abgezogen wird, befindet sich oberhalb des Tragbandgurts 2, der sich etwa über die Hälfte des Umfangs der Auflage 7 an diese anfügt.

Die Auflage 7 ist über eine zentrale Drehachse 10 drehbar. Weiterhin ist ein axialer Zulauf 11 für die verunreinigte, zu filternde Flüssigkeit dargestellt.

Eine stationäre Halterung 12 lagert mittels der Drehachse 13 einen drehbaren Mitnehmer 14. Der Mitnehmer 14 ist L-förmig aufgebaut, so dass an seinem rückwärtigen Schenkel 15 eine Rückstellfeder 16 angreifen kann.

Am vorderen Schenkel 17 des Mitnehmers 14 ist eine Abstreifleiste 18 befestigt, die in der vorliegenden Ausführungsform elastisch ist.

An der Unterseite des vorderen Schenkels 17 sowie des Mitnehmers 14 ist in gestrichelten Linien eine Steuerkurve 19 angebracht, so dass der vordere Schenkel 17 zugleich das Kurvensteuerelement für den Mitnehmer 14 bildet.

Fest mit der drehbaren Auflage 7 sind leistenförmige rotierende Mitnehmer 20 angebracht, an denen elastische Lippen oder Abstreifleisten 21 angebracht sind. Wie anhand des obersten rotierenden Mitnehmers 20 in Fig. 1 erkennbar ist, stehen die elastischen Lippen 21 im entspannten, nicht verformten Zustand über den Umfang der drehbaren Auflage 7 hinaus.

Das Vlies 8 ist zwischen der drehbaren Auflage 7 und dem tragbaren Gurt 2 eingefädelt und wird erst im rückwärtigen Bereich bezogen auf die Drehrichtung D von der Auflage 7 beabstandet. Diesen Bereich der Beabstandung wird das Filterband 8' über die obere Umlenkkeule 3 geführt. Anschließend wird das Filterband 8'' in einer Abwärtsbewegung in einem Sammelbehälter gebracht.

Die zu reinigende Flüssigkeit wird über den axialen Zulauf 11 ins Innere der trommelförmigen Auflage 7 eingebracht, die umfangsseitig durch das Filtervlies 8 abgeschlossen ist. Beim Durchtritt durch das Filtervlies 8 wird die Flüssigkeit gereinigt und in der nicht näher dargestellten Auffangwanne gesammelt.

Auf dem Filtervlies 8 sammeln sich gefilterte Partikel als Filterkuchen an (nicht näher dargestellt), die während der Drehbewegung D der Auflage 7 mitgeführt werden. Dafür sorgen insbesondere die elastischen Lippen 21 der Mitnehmer 20 für eine entsprechende Mitnahme des Filterkuchens.

Das Filterband 8' wird in einer Aufwärtsbewegung am rückwärtigen Bereich der Auflage 7 von dieser beabstandet. Dabei besteht die Gefahr, das der daraufliegende Filterkuchen zurück auf das darunter befindliche Filtervlies fällt.

Die Funktion des Mitnehmers 14, insbesondere in der Wechselwirkung mit den Mitnehmern 20, wird nachfolgend näher erläutert.

In der Position gemäß Fig. 1 befindet sich der Mitnehmer 14 in seiner Ruhestellung. Der obere rotierende Mitnehmer 20 befindet sich in entspanntem Zustand, während sich die unteren Mitnehmer 22, 23 mit ihrem zugehörigen elastischen Lippen an das Filtervlies 8 anschmiegen.

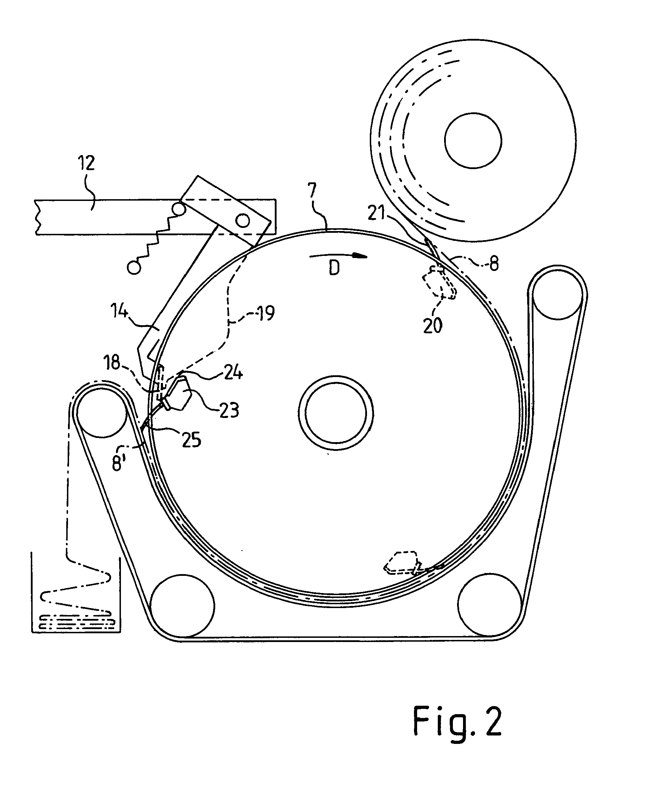

In Fig. 2 ist der Zeitpunkt dargestellt, bei dem der Mitnehmer 20 mit seiner elastischen Lippe 21 auf das Filtervlies 8 trifft und dabei allmählich in die angeschmiegte Form (vgl. rotierende Mitnehmer 22, 23 in Fig. 1) gebracht wird.

Auf der gegenüberliegenden rückwärtigen Seite kommt der rotierende Mitnehmern 23 mit seinem Anschlag 24 in Anschlag mit der Steuerkurve 19 des stationär gelagerten Mitnehmers 14. Zugleich ist erkennbar, dass die Abstreifleiste 18 mit der elastischen Lippe 25 des Mitnehmers 23 in Berührung kommt. Die elastische Lippe 25 ist zu diesem Zeitpunkt bereits deutlich wahrnehmbar über den Umfang der Auflage 7 hervorgetreten, da das Filtervlies 8' bereits mit einem gewissen Abstand von der Auflage 7 geführt wird.

Zu diesem Zeitpunkt wird der Filterkuchen durch die elastische Lippe 25 mitgenommen.

Mit fortschreitender Bewegung der Auflage 7 in Richtung D entspannt sich die elastische Lippe 25 des rotierenden Mitnehmers 23 zusehends, während zugleich die Abstreifleiste 18 entlang der elastischen Lippe 25 streift und dabei dort aufliegende Partikel bzw. den dort anliegenden Filterkuchen abstreift. Diese simultane Bewegung des Mitnehmers 14 wird dadurch gesteuert, dass der Anschlag 24 entlang der Steuerkurve 19 gleitet und dabei den drehbar an der stationären Halterung 12 gelagerten Mitnehmer 14 in gewünschte Position drückt.

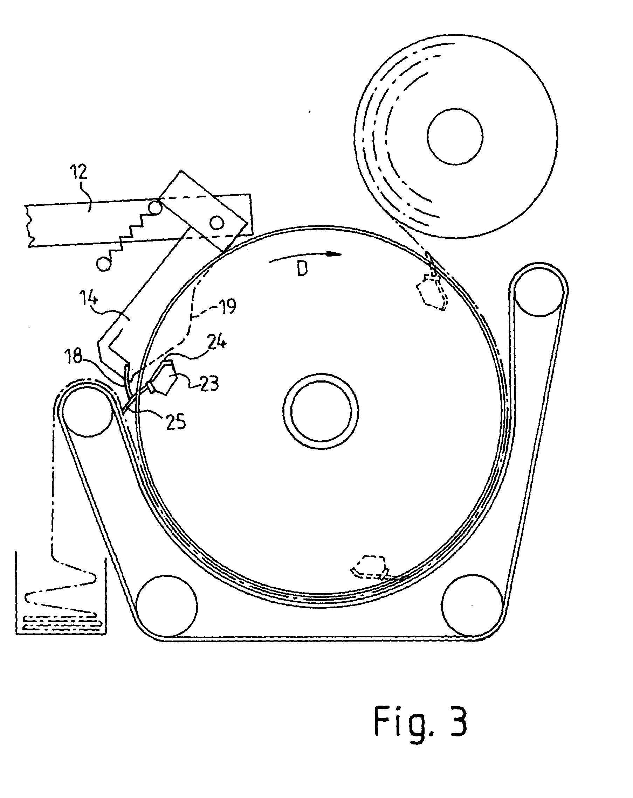

In Fig. 3 ist insbesondere auch erkennbar, dass in dieser Ausführungsform die Abstreifleiste 18 ebenfalls wie die Lippe 25 elastisch ausgeführt ist, so dass sich ein guter Formschluss zwischen der Abstreifleiste 18 und der elastischen Lippe 25 ergibt.

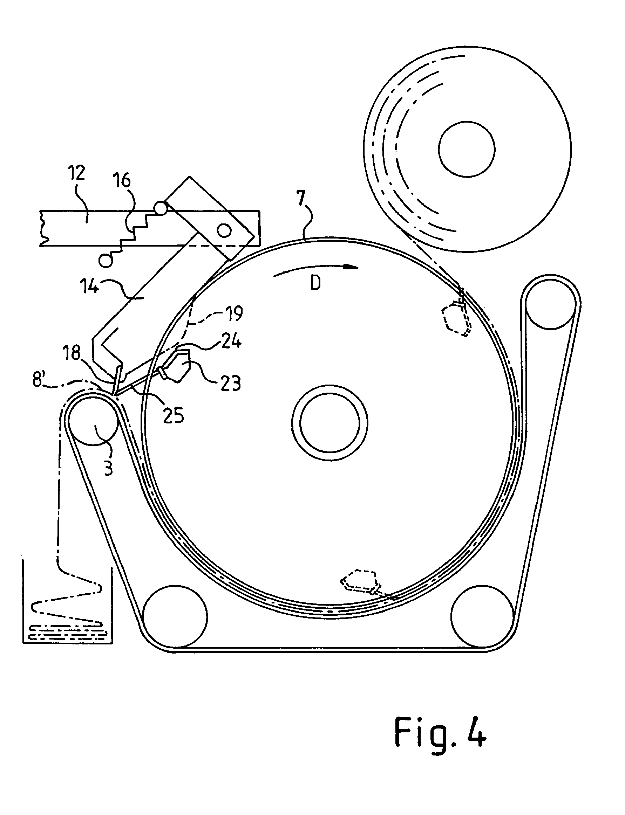

Mit fortschreitender Bewegung D (vgl. Fig. 4) streift die Abstreifleiste 18 die elastische Lippe 25 des rotierenden Mitnehmers 23 vollständig ab und kommt dabei spätestens zu dem Zeitpunkt, an dem die elastische Lippe 25 das Filtervlies 8' verlässt zur Auflage auf dem Filtervlies 8'. Ab diesem Moment übernimmt die Abstreifleiste 18 die Mitnahmefunktion der elastischen Lippe 25, die sie zuvor leergeräumt hat.

Im weiteren Verlauf der Drehbewegung D wird die Abstreifleiste 18 noch über einen gewissen Weg auf dem Filterband 8' geführt. Diese Bewegung wird nach wie vor durch das Gleiten des Anschlags 24 auf der Steuerkurve 19 bewirkt.

Nachdem das Filtervlies 8' eine so geringe Schrägstellung erreicht hat, dass keine Gefahr des Zurückfallens des darauf befindlichen Filterkuchen mehr besteht, d.h. spätestens am oberen Todpunkt senkrecht über der Umlenkkeule 3 wird der elastische Mitnehmer 14 aufgrund der Rückstellfeder 16 sowie des zugehörigen Kurvenverlaufs der Steuerkurve 19 beim weiteren Entlanggleiten des Anschlags 24 wieder in die Ausgangsstellung zurückgebracht.

In den Darstellungen nicht erkennbar sind die Anordnung des Anschlags 24 sowie der Steuerkurve an der Stirnseite der trommelförmigen Auflagen 7. Dies ist deshalb von Bedeutung, damit die elastische Lippe 25, nachdem sie die Abstreifleiste 18 unterhalb passiert hat, seitlich neben dem Mitnehmer 14 ungestört in der Drehbewegung weiterlaufen kann.

Die Erfindung ist selbstverständlich nicht auf das dargestellte Ausführungsbeispiel mit den Mitnehmern 23 und deren elastischen Lippen 25 beschränkt, die fest mit der drehbaren Auflage 7 verbunden sind. Wesentlich ist die Abkehr von beweglich an der Auflage 7 angebrachten Mitnehmern gemäß dem Stand der Technik, deren Funktion auch ohne die mit der Auflage 7 mitlaufenden Mitnehmern 23 bei entsprechender Ausgestaltung durch einen stationär gelagerten Mitnehmer 14 im Auslaufbereich des Filtervlieses 8' grundsätzlich erzielbar sind.

Bezugszeichenliste:
- 1.: Filtervorrichtung
- 2.: Tragbandgurt
- 3.: Umlenkrolle
- 4.: Umlenkrolle
- 5.: Umlenkrolle
- 6.: Umlenkrolle
- 7.: Auflage
- 8.: Filtervlies
- 9.: Vorratsrolle
- 10.: Drehachse
- 11.: Zulauf
- 12.: stationäre Halterung
- 13.: Drehachse
- 14.: Mitnehmer
- 15.: rückwärtige Schenkel
- 16.: Rückstellfeder
- 17.: vorderer Schenkel
- 18.: Abstreifleiste
- 19.: Steuerkurve
- 20.: rotierende Mitnehmer
- 21.: elastische Lippe
- 22.: rotierende Mitnehmer
- 23.: rotierende Mitnehmer
- 24.: Anschlag
- 25.: elastische Lippe

## Patentansprüche

1. Filtervorrichtung mit einer drehbaren Auflage (7) für ein durchlaufendes Filtervlies (8), das in einer Aufwärtsbewegung aus einer zu filternden Flüssigkeit und von der drehbaren Auflage (7) weggeführt ist, **dadurch gekennzeichnet, dass** ein Mitnehmer (14) an einer bezogen auf die drehbare Auflage (7) stationären Halterung (12) befestigt ist.

2. Vorrichtung nach Anspruch 1, **dadurch gekennzeichnet, dass** der Mitnehmer (14) an der stationären Halterung (12) beweglich angebracht ist.

3. Vorrichtung nach einem der vorgenannten Ansprüche, **dadurch gekennzeichnet, dass** der Mitnehmer (14) an der stationären Halterung (12) drehbar gelagert ist.

4. Vorrichtung nach einem der vorgenannten Ansprüche, **dadurch gekennzeichnet, dass** ein oder mehrere Steuerelemente (19) für die gesteuerte Bewegung des an der stationären Halterung (12) angebrachten Mitnehmer (14) vorgesehen ist.

5. Vorrichtung nach einem der vorgenannten Ansprüche, **dadurch gekennzeichnet, dass** eine Kurvensteuerung (19) für den an der stationären Halterung (12) beweglich angebrachten Mitnehmer (14) vorgesehen ist.

6. Vorrichtung nach einem der vorgenannten Ansprüche, **dadurch gekennzeichnet, dass** ein oder mehrere mit der drehbaren Auflage (7) rotierende Mitnehmer (20, 22, 23) vorgesehen sind.

7. Vorrichtung nach einem der vorgenannten Ansprüche, **dadurch gekennzeichnet, dass** das oder die rotierenden Mitnehmer (20, 22, 23) eine elastische Lippe (21, 25) zur Auflage auf dem Filtervlies (8) umfassen.

8. Vorrichtung nach einem der vorgenannten Ansprüche, **dadurch gekennzeichnet, dass** die rotierenden Mitnehmer (20, 22, 23) wenigstens an der Stirnseite an der drehbaren Auflage (7) befestigt sind.

9. Vorrichtung nach einem der vorgenannten Ansprüche, **dadurch gekennzeichnet, dass** die rotierenden Mitnehmer(20, 22, 23) als sich über die Längsrichtung der drehbaren Auflage (7) erstreckende Leisten (20, 22, 23) ausgebildet sind.

10. Vorrichtung nach einem der vorgenannten Ansprüche, **dadurch gekennzeichnet, dass** der an der stationären Halterung angebrachten Mitnehmer (14) ein Kurvenelement (19) mit einer Steuerkurve (19) aufweist.

11. Vorrichtung nach einem der vorgenannten Ansprüche, **dadurch gekennzeichnet, dass** der oder die rotierenden Mitnehmer (20, 22, 23) einen Anschlag (24) zum Anschlag auf dem Kurvenelement (19) des an der stationären Halterung (12) angebrachten Mitnehmers (14) umfassen.

12. Vorrichtung nach einem der vorgenannten Ansprüche, **dadurch gekennzeichnet, dass** ein oder mehrere Rückstellelemente (16) für die Rückstellung des an der stationären Halterung (12) angebrachten Mitnehmers (14) vorgesehen sind.

13. Werkzeugmaschine mit einer Vorrichtung zur Kühlschmiermittelaufbereitung, **dadurch gekennzeichnet, dass** eine Filtervorrichtung nach einem der vorgenannten Ansprüche vorgesehen ist.
